# EUROPEAN PATENT APPLICATION

(11) **EP 4 818 742 A1**
(43) Date of publication of application: **07.10.2026**
(21) Application number: 26168716.4
(22) Date of filing: 27.03.2026
(51) Int. Cl.: G01S 7/41, G01S 13/42, G01S 13/48

(54) **APPARATUS AND METHOD FOR GENERATING TRAINING DATA FOR ESTIMATING DIRECTION OF ARRIVAL**

(30) Priority: 01.04.2025 KR 20250042269
(71) Applicant: bitsensing Inc, Seongnam-si, Gyeonggi-do 13105 (KR)
(72) Inventor: CHAE, Young Hwan, 13105 Seongnam-si, Gyeonggi-do (KR)
(74) Representative: BCKIP Part mbB

(57) **Abstract**

An apparatus for generating training data for estimating a direction of arrival (DOA) includes a first noise extraction unit configured to extract a hardware noise signal of a radar based on a first radar signal received in a first environment; a second noise extraction unit configured to extract an environmental noise signal corresponding to a second environment based on a second radar signal received in the second environment and the hardware noise signal; a third noise extraction unit configured to extract an additive noise signal based on the hardware noise signal and the environmental noise signal; and a data generation unit configured to generate training data based on the additive noise signal and a target radar signal corresponding to each target object.

## Description

### TECHNICAL FIELD

The present disclosure relates to an apparatus and method for generating training data for estimating a direction of arrival (DOA) based on a radar signal.

### BACKGROUND

A wave-based sensor is configured to receive electromagnetic waves or acoustic waves reflected from an object, thereby enabling the estimation of a position, a velocity, a direction, and the like of a target object. Representative examples thereof may include radars, ultrasonic sensors, acoustic sensors, and wireless communication sensors. Such sensors are configured to estimate a direction of arrival (DOA) by analyzing spatial phase differences among signals received through a plurality of receiving antennas.

The DOA estimation technology is a technique for calculating a direction in which a target object is present based on complex-valued signals received through a plurality of receiving channels. Conventionally, subspace-based algorithms, such as MUSIC (Multiple Signal Classification) and ESPRIT (Estimation of Signal Parameters via Rotational Invariance Techniques), are widely used. While these algorithms are generally mathematically rigorous and provide high accuracy, they rely on the assumption of a plurality of receiving channels and a static environment, thereby limiting their practical implementation.

Conventional DOA estimation techniques utilize measured data collected in a static environment or generate synthetic data based on statistical or theoretical models for algorithm training. However, in an environment where an actual radar system operates, various types of noise occur due to hardware characteristics and environmental factors, and such noise directly affects the performance of the system. For example, noise originating from radar hardware, deviations between antennas, electromagnetic interference, the number of reflecting objects, and multipath reflection between structures induce irregularities in the phase and amplitude of a signal, which may lead to degradation in the accuracy of a DOA estimation algorithm.

In particular, conventional synthetic data fails to reflect hardware and environmental noise characteristics or models noise based on simple statistical distributions, resulting in a discrepancy from actual operational environments. This makes it difficult to obtain a model trained under conditions close to the actual operational environments, thereby degrading the generalization performance of the algorithm.

Furthermore, since hardware noise and environmental noise have independent characteristics, there is a need to separately analyze and model them. However, most conventional studies treat such noise as a single noise source without clearly distinguishing between its components, thereby limiting the flexibility in generating training data for various scenarios.

Accordingly, there is a need for a technique capable of effectively generating training data to improve DOA estimation performance by reflecting various noise characteristics that may occur in an actual radar environment.

### SUMMARY

In view of the foregoing, the present disclosure has been conceived to solve limitations in conventional techniques that fail to effectively reflect various noise characteristics occurring in actual operational environments in connection with generating training data for DOA estimation. In particular, the present disclosure provides training data for a data-based DOA estimation model that substantially reflects the actual operational environments by differentiating hardware noise from environmental noise, independently analyzing each noise component, and incorporating the analyzed noise components into the training data.

The present disclosure provides a technique capable of independently identifying and quantifying individual noise components by extracting a hardware noise component from a radar signal received in a controlled environment (e.g., a chamber environment) and subsequently isolating and extracting environmental noise from a radar signal received in an actual operational environment.

Furthermore, the present disclosure enables the generation of synthetic training data that reflects various conditions by utilizing an additive noise model that integrates the extracted hardware noise and environmental noise components. This facilitates training of a robust DOA estimation model capable of adapting to various operational scenarios.

The problems to be solved by the present disclosure are not limited to the above-described problems. There may be other problems to be solved by the present disclosure.

According to an exemplary embodiment, an apparatus for generating training data for estimating a direction of arrival (DOA) may include a first noise extraction unit configured to extract a hardware noise signal of a radar based on a first radar signal received in a first environment; a second noise extraction unit configured to extract an environmental noise signal corresponding to a second environment based on a second radar signal received in the second environment and the hardware noise signal; a third noise extraction unit configured to extract an additive noise signal based on the hardware noise signal and the environmental noise signal; and a data generation unit configured to generate training data based on the additive noise signal and a target radar signal corresponding to each target object.

The above-described aspects are provided by way of illustration only and should not be construed as limiting the present disclosure. Besides the above-described embodiments, there may be additional embodiments described in the accompanying drawings and the detailed description.

According to the present disclosure, it is possible to provide training data for a data-based DOA estimation model that substantially reflects actual operational environments by differentiating hardware noise from environmental noise, independently analyzing each noise component, and incorporating the analyzed noise components into the training data.

According to the present disclosure, it is possible to significantly reduce cost and time by enabling the generation of a large amount of synthetic data using measured noise characteristics (hardware and environmental noise) instead of collecting an immense amount of measured data under all actual environmental conditions.

According to the present disclosure, it is possible to independently identify and quantify individual noise components by extracting a hardware noise component from a radar signal received in a controlled environment (e.g., a chamber environment) and subsequently isolating and extracting environmental noise from a radar signal received in an actual operational environment.

Since the present disclosure can account for noise performance that varies depending on radar models (e.g., the number of channels, design specifications, etc.), data optimized for the characteristics of each model can be generated. Therefore, the present disclosure can be easily applied to various radar models.

According to the present disclosure, a model trained on various noise spectra can respond more robustly to changes in actual environments and achieve higher accuracy and flexibility than conventional subspace-based models.

### BRIEF DESCRIPTION OF THE DRAWINGS

In the detailed description that follows, embodiments are described as illustrations only since various changes and modifications will become apparent to a person with ordinary skill in the art from the following detailed description. The use of the same reference numbers in different figures indicates similar or identical items.
**FIG.** 1 is a configuration view of a training data generation system according to an embodiment of the present disclosure.
**FIG. 2** is a block diagram of a training data generation apparatus according to an embodiment of the present disclosure.
**FIG. 3** is a flowchart showing a method for generating training data according to an embodiment of the present disclosure.

### DETAILED DESCRIPTION

Hereinafter, embodiments of the present disclosure will be described in detail with reference to the accompanying drawings to be readily implemented by a person with ordinary skill in the art to which the present disclosure belongs. However, it is to be noted that the present disclosure is not limited to the example embodiments but can be embodied in various other ways. In the drawings, parts irrelevant to the description are omitted in order to clearly explain the present disclosure, and like reference numerals denote like parts through the whole document.

Throughout this document, the term "connected to" may be used to designate a connection or coupling of one element to another element and includes both an element being "directly connected" to another element and an element being "electronically connected" to another element via another element. Further, it is to be understood that the term "comprises or includes" and/or "comprising or including" used in the document means that one or more other components, steps, operation and/or the existence or addition of elements are not excluded from the described components, steps, operations and/or elements unless context dictates otherwise; and is not intended to preclude the possibility that one or more other features, numbers, steps, operations, components, parts, or combinations thereof may exist or may be added.

Throughout this document, the term "unit" includes a unit implemented by hardware and/or a unit implemented by software. As examples only, one unit may be implemented by two or more pieces of hardware or two or more units may be implemented by one piece of hardware.

In the present specification, some of operations or functions described as being performed by a device may be performed by a server connected to the device. Likewise, some operations or functions described as being performed by a server may be performed by a device connected to the server.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein.

In the disclosure, the circuitry, units, or means refer to hardware that carry out or are programmed to perform the recited functionality. The hardware may be any hardware disclosed herein or otherwise known which is programmed or configured to carry out the recited functionality.

When the hardware is a processor which may be considered a type of circuitry, the circuitry, means, or units are a combination of hardware and software, the software being used to configure the hardware and/or processor.

Hereinafter, an embodiment of the present disclosure will be described in detail with reference to the accompanying drawings.

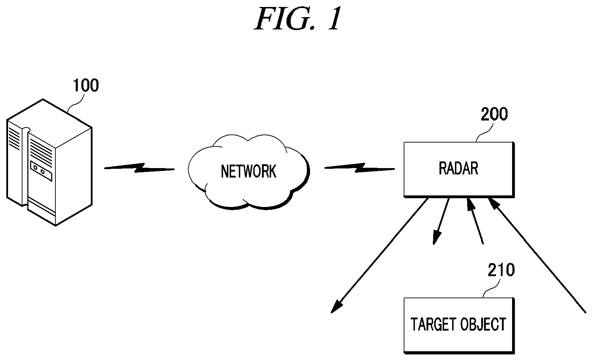

**FIG.** 1 is a configuration view of a training data generation system according to an embodiment of the present disclosure.

Referring to **FIG. 1****,** a training data generation system for training a direction of arrival (DOA) estimation model may include a training data generation apparatus 100 and a radar 200.

The training data generation apparatus 100 and the radar 200 may be connected simultaneously or at time intervals. Herein, the training data generation apparatus 100 and the radar 200 may be connected through a network. The term "network" refers to a connection structure that enables information exchange between nodes such as devices, servers, and the like. and includes LAN (Local Area Network), WAN (Wide Area Network), Internet (WWW: World Wide Web), a wired or wireless data communication network, a telecommunication network, a wired or wireless television network, and the like. Examples of the wireless data communication network may include 3G, 4G, 5G, 3GPP (3rd Generation Partnership Project), LTE (Long Term Evolution), WIMAX (World Interoperability for Microwave Access), Wi-Fi, Bluetooth communication, infrared communication, ultrasonic communication, VLC (Visible Light Communication), LiFi, and the like, but may not be limited thereto.

The training data generation apparatus 100 may generate training data based on a radar signal reflected from a target object 210 using the radar 200. When the target object 210 is located around the radar 200 or moves within a detection range of the radar 200, varying radar signals may be collected.

Based on such radar signals, the training data generation apparatus 100 may generate training data for training a DOA estimation model configured to estimate a DOA of a radar signal reflected from the target object 210. For example, the radar 200 may be installed around or inside a specific device and may detect the target object 210 located or moving near the corresponding device. For example, the radar 200 may be installed at a certain position of a vehicle or installed indoors or outdoors depending on the purpose. The radar 200 may transmit a radar signal toward the target object 210 and receive a radar signal reflected from the target object 210. The radar 200 may be oriented to facilitate transmission of a radar signal toward the target object 210 and reception of the radar signal therefrom.

The radar 200 is a Multiple Input Multiple Output (MIMO) radar that may include a plurality of transmitting antennas and receiving antennas, and may receive signals reflected from the target object 210 using various frequencies. The radar 200 transmits a radar signal through a high-power transmitting antenna and receives a reflected signal through a plurality of receiving antennas, thereby more precisely detecting the presence of the target object 210 or a change in the position of the corresponding object. In particular, the radar 200 can extract information on the movement or distance of the target object 210 by analyzing inter-channel phase or amplitude information, thereby providing data suitable for DOA estimation.

The target object 210 may include various forms, such as a stationary object, a moving object, a vehicle, or a pedestrian. When the target object 210 is located or moves within the detection range of the radar 200, a signal reflected by the target object 210 returns to the radar 200. Thus, based on the reflected signal, not only the presence of the target object 210 but also a direction or movement trajectory thereof may be estimated with high precision. Furthermore, even when a plurality of target objects 210 are present or a plurality of large and small objects are simultaneously detected, the plurality of target objects 210 may be simultaneously detected and separated by collecting various channel data through the MIMO radar 200.

The radar signals collected through the radar 200 may be stored in the training data generation apparatus 100 or a separate database. At least some components of the training data generation apparatus 100 may be remotely located from the radar 200 and may communicate wirelessly or via a wire with the radar 200 through the network. In the following description, the radar 200 is an example of a wave-based sensor and may include DOA estimation technology applicable to sensors using various types of waves, such as electromagnetic (EM) sensors (e.g., radars, wireless communication-based sensors, or optical sensors), acoustic wave sensors, or elastic wave sensors. Herein, the radar 200 may include an ATM220 sensor having a MIMO-based structure for acquiring a plurality of channel data through a plurality of transmitting antennas and a plurality of receiving antennas, and may be configured to determine a DOA by receiving a signal reflected from the target object 210.

Furthermore, the radar 200 may employ a DOA estimation method to estimate a direction from which a signal is incident, in a manner similar to other types of wave-based sensors such as an airborne acoustic sensor, an underwater acoustic sensor, an ultrasonic sensor, or a surface acoustic wave sensor. The training data generation apparatus 100 according to the present disclosure may be configured to process data generated from such various types of wave-based sensors. **FIG. 1** illustrates a process for generating training data by way of example using the radar 200.

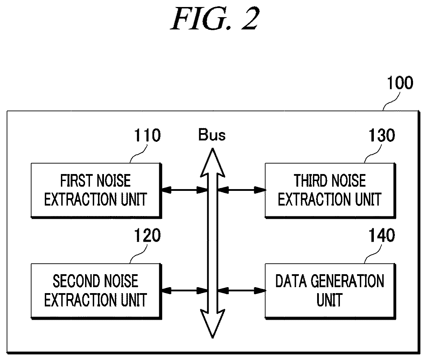

**FIG. 2** is a block diagram of a training data generation apparatus according to an embodiment of the present disclosure.

Referring to **FIG. 2****,** the training data generation apparatus 100 may include a first noise extraction unit 110 configured to extract a hardware noise signal of the radar based on a first radar signal received in a first environment, a second noise extraction unit 120 configured to extract an environmental noise signal corresponding to a second environment based on a second radar signal received in the second environment and the hardware noise signal, a third noise extraction unit 130 configured to extract an additive noise signal based on the hardware noise signal and the environmental noise signal, and a data generation unit 140 configured to generate training data based on the additive noise signal and the target radar signal corresponding to each target object.

Herein, the first environment may refer to a chamber environment in which an environmental noise signal occurs below a predetermined level.

The first noise extraction unit 110 may receive a number of first radar signals greater than the number of radar channels in the first environment.

The first radar signals received in the first environment may include a target object signal and a hardware noise signal.

The first noise extraction unit 110 may extract the hardware noise signal by removing the target object signal from the first radar signals received in the first environment.

The first noise extraction unit 110 may perform Single Value Decomposition (SVD) on the first radar signals received in the first environment to derive a first decomposition matrix based on the number of target objects and the number of radar channels.

The first noise extraction unit 110 may extract information unrelated to a target object from the first decomposition matrix based on the number of target objects, and may extract a hardware noise signal based on the extracted information.

The second environment may refer to an actual operational environment in which DOA estimation is performed.

Second radar signals received in the second environment may include a target object signal, a hardware noise signal, and an environmental noise signal. The second noise extraction unit 120 may extract the environmental noise signal by removing the target object signal and the hardware noise signal from the second radar signals received in the second environment.

The second noise extraction unit 120 may perform SVD on the second radar signals received in the second environment to derive a second decomposition matrix based on the number of target objects and the number of radar channels.

The second noise extraction unit 120 may extract information unrelated to a target object from the second decomposition matrix based on the number of target objects, and may derive a residual matrix based on the extracted information.

The second noise extraction unit 120 may perform SVD on the residual matrix to derive a third decomposition matrix.

The second noise extraction unit 120 may extract information unrelated to the hardware noise signal from the third decomposition matrix, and may extract the environmental noise signal based on the extracted information.

The third noise extraction unit 130 may determine a minimum variance and a maximum variance of the additive noise signal based on the respective variances of the hardware noise signal and the environmental noise signal.

Further, the second noise extraction unit 120 may extract environmental noise signals for a plurality of second environments, and the third noise extraction unit 130 may generate an additive noise signal for a plurality of environments based on the extracted environmental noise signals.

The data generation unit 140 may generate training data by adding the additive noise signal to target radar signals received according to a predetermined number of target objects.

The data generation unit 140 may generate the training data by mapping the DOA of the target object to the training data.

Hereinafter, each component will be described in more detail.

The data generation unit 140 may generate training data based on reception data of the radar 200. To this end, a signal acquired from an Analog-to-Digital Converter (ADC) of the radar may be converted into a Range-Doppler map by performing a two-dimensional Fast Fourier Transform (2-D FFT), and a position of a target object is then detected using a Constant False Alarm Rate (CFAR) algorithm. After target detection, range and velocity information for each target may be produced through peak detection, and angle information for each target may then be estimated based on a channel array. Such a process is performed in the training data generation apparatus 100 or the radar 200, and the radar signal processed through the process may be stored in the training data generation apparatus 100 or a separate database.

In general, an antenna array of the radar 200 consists of a virtual array composed of transmitting (Tx) antennas and receiving (Rx) antennas. For example, in a 2Tx-8Rx array, a total of 16 virtual array elements are formed. Each array element receives complex-valued data including amplitude and phase information of the signal. The complex-valued data received via the virtual array may be represented by the following model. <Equation 1> ${ϕ}_{n} = 2 πd sin \left({θ}_{n}\right) + {η}_{n}$

In Equation 1, ϕₙ denotes a phase generated from an nth target object, d denotes an antenna spacing, and θₙ denotes an angle of arrival of the nth target object. Also, in Equation 1, ηₙ denotes random phase noise and may generally be modeled as noise having a uniform distribution within a range of -π to π.

A plurality of signals arriving from a plurality of target objects are superimposed at a receiving antenna, and a composite received signal y may be modeled as follows. <Equation 2> $y = {\sum }_{n = 1}^{N} {A}_{n} {e}^{{iϕ}_{n}} + ω$

In Equation 2, Aₙ denotes an amplitude of a signal reflected from the nth target object and reaching a receiver, e^{(i*θn)} denotes a complex-valued phase factor corresponding to target object, and ω denotes additive noise present in the entire receiving system. Such noise is typically modeled as zero-mean, complex-valued Gaussian noise.

Additive noise may exhibit diverse distributions depending on characteristics of radar hardware and an operational environment. The present disclosure reflects such noise characteristics to enable the generation of realistic synthetic data. Such training data may be used to enhance the training performance of a DOA estimation model, thereby improving the estimation accuracy in an actual operational environment.

The third noise extraction unit 130 may generate an additive noise signal by combining the hardware noise signal extracted from the first noise extraction unit 110 and the environmental noise signal extracted from the second noise extraction unit 120. The additive noise signal is a key element for generating training data that reflects various noise conditions received in an actual radar system, and its characteristics may vary depending on actual usage conditions, such as the hardware configuration, operational environment, and installation position of the radar.

In generating synthetic data, the third noise extraction unit 130 is configured to ensure that data generated by adding noise exhibits statistical characteristics similar to those of radar data received in an actual operational environment. In general, the additive noise is defined as a Gaussian distribution with a mean of 0 and a variance of σₐ², and may be expressed as follows: <Equation 3> $ω ∼ N \left(0, {σ}_{a}^{2}\right)$

In Equation 3, σₐ denotes a standard deviation of noise, and may have various values depending on design characteristics and an operational environment of a radar. In the present disclosure, σₐ is set as a random variable having an arbitrary value within a specific range rather than as a fixed variance, thereby enabling the modeling of more diverse noise conditions. <Equation 4> ${σ}_{a} ∼ U \left({σ}_{min}, {σ}_{max}\right)$

In Equation 4, σₐ may be generated as a random variable that is uniformly distributed between a minimum standard deviation σₘᵢₙ and a maximum standard deviation σₘₐₓ.

By applying such a variable variance, it is possible to simulate various noise levels that may occur in an actual operational radar environment and enhance the realism of the training data.

Meanwhile, the additive noise may be modeled as the sum of the hardware noise component and the environmental noise component. <Equation 5> $ω \approx {ω}_{h} + {ω}_{e}$

The third noise extraction unit 130 may generate a total additive noise ω as shown in Equation 5, where ωₕ denotes a hardware noise component and ωₑ denotes an environmental noise component.

As described above, the additive noise is modeled by combining two types of noise components having distinct statistical characteristics from each other, and is thereafter directly applied to training data, thereby enabling the generation of data that reflects various actual environmental conditions.

The first noise extraction unit 110 may extract a hardware noise signal of the radar based on the first radar signals received in the first environment. The first environment may be a chamber environment in which environmental noise is shielded or occurs at a negligible level. In such an environment, noise components attributable to the intrinsic characteristics of the radar hardware serve as a dominant influencing factor.

The first noise extraction unit 110 is configured to receive a plurality of radar signal samples acquired in the first environment, and the number of samples may be set to be greater than the number of radar channels. The data received in this manner may be configured as a complex-valued matrix including a target signal component and a hardware noise component. <Equation 6> ${X}_{C} = {X}_{t} + {X}_{h}$

In Equation 6, X_{C} denotes a total data matrix received in the first environment, Xₜ denotes a signal component of a target object, and Xₕ denotes a hardware noise component. The first noise extraction unit 110 may perform SVD on X_{C} to derive a first decomposition matrix as follows. <Equation 7> ${X}_{C} = {U}_{C} {S}_{C} {V}_{C}^{H}$

Herein, U_{C}, S_{C}, and V_{C} denote a left singular vector matrix, a diagonal matrix including singular values, and a right singular vector matrix, respectively. Dimensions of each matrix are determined according to the number N of target objects and the number n_{ch} of radar channels.

The singular values in S_{C} are arranged in descending order along the diagonal, and, thus, when the number of target objects is nₜ, the top nₜ singular values may be primarily contributed by the signals reflected from the target objects. Accordingly, the first noise extraction unit 110 may isolate components unrelated to the target objects by removing the top nₜ singular values from S_{C} and retaining the remaining singular values, and may regard the isolated components as hardware noise. Through such a process, a singular value matrix regarded as noise may be expressed as follows. <Equation 8> ${\hat{S}}_{C} = {S}_{C} - diag \left({s}_{1},{s}_{2},…,{s}_{{n}_{t}},0,…,0\right)$

In Equation 8, s₁, s₂, ..., and sₙₜ denote top singular values. A variance σₕ² of the hardware noise may be estimated by calculating the mean square value of the singular values remaining after removing the top singular values. The hardware noise variance is defined as follows. <Equation 9> ${σ}_{h}^{2} = \frac{1}{{n}_{ch} - {n}_{t}} {\sum }_{i = {n}_{t} + 1}^{{n}_{ch}} {s}_{i}^{2}$

As shown in Equation 9, based on the calculated variance value, the first noise extraction unit 110 may model the hardware noise according to a Gaussian noise distribution with a mean of 0 and a variance of σₕ², and may be expressed as ωₕ ~ N(0, σₙ²).

According to the present embodiment, the first noise extraction unit 110 may remove the target signal component from the first radar signals received in the first environment, quantify the statistical characteristics of the hardware noise through SVD, and independently separate and extract the same. Accordingly, the extracted hardware noise signal may be utilized as a precise component of the environmental noise signal and the additive noise signal in a subsequent process.

The second noise extraction unit 120 may extract an environmental noise signal associated with the second environment based on the second radar signals received in the second environment and the hardware noise signal extracted by the first noise extraction unit 110. Herein, the second environment refers to an actual operational environment in which DOA estimation is performed. Within the second environment, multivariate noise characteristics arise due to various external interferences and reflection environments.

The second radar signals received in the second environment include a signal component reflected from a target object, a hardware noise component, and an environmental noise component. A composite reception data matrix X_{PG} composed of these components may be expressed as follows. <Equation 10> ${X}_{PG} = {X}_{t} + {X}_{h} + {X}_{e}$

Herein, X_{PG} denotes a complex-valued signal data matrix received in the second environment, Xₜ denotes a target signal component, Xₕ denotes a hardware noise component, and Xₑ denotes an environmental noise component.

The second noise extraction unit 120 may perform SVD on X_{PG} to derive a second decomposition matrix as follows. <Equation 11> ${X}_{PG} = {U}_{PG} {S}_{PG} {V}_{PG}^{H}$

In Equation 11, U_{PG}, S_{PG}, and V_{PG} denote a left singular vector, a singular value matrix, and a right singular vector, respectively. Similar to the SVD performed in the chamber environment described above, the top nₜ singular values may be considered attributable to target signals. Accordingly, a residual matrix Xᵣₑₛ remaining after removing the target component and including only hardware noise and environmental noise may be derived as follows. <Equation 12> ${\hat{S}}_{PG} = {S}_{PG} - diag \left({s}_{1}, {s}_{2},…, {s}_{{n}_{t}}, 0,…, 0\right)$ <Equation 13> ${X}_{res} = {U}_{PG} {\hat{S}}_{PG} {V}_{PG}^{H}$

In Equations 12 and 13, the second noise extraction unit 120 utilizes a variance σₕ² of the hardware noise derived above to further remove a hardware noise component from Xᵣₑₛ. <Equation 14> ${X}_{res} = {U}_{res} {S}_{res} {V}_{res}^{H}$

Equation 14 defines the derivation of a third decomposition matrix by re-performing SVD on the residual matrix Xᵣₑₛ. <Equation 15> ${{r}^{˜}}_{i} = max \left({s}_{i}-{σ}_{h}, 0\right)$

Equation 15 defines the derivation of a threshold corresponding to a maximum variance of the hardware noise for each singular value sᵢ of the third decomposition matrix. Components below the threshold are regarded as hardware noise and are removed. <Equation 16> ${{S}^{˜}}_{res} = diag \left({{s}^{˜}}_{1}, {{s}^{˜}}_{2},…\right)$

Equation 16 defines a reconstructed singular value matrix Sᵣₑₛ through the above-described process. <Equation 17> ${X}_{e} = {U}_{res} {{S}^{˜}}_{res} {V}_{res}^{H}$

Finally, Equation 17 defines a matrix Xₑ including only pure environmental noise after the hardware noise is removed. <Equation 18> ${σ}_{e}^{2} \approx \frac{1}{N \times {n}_{ch}} {\sum }_{n = 1}^{N} {\sum }_{c = 1}^{{n}_{ch}} {\left|{X}_{e}\left(n, c\right)\right|}^{2}$

In Equation 18, the second noise extraction unit 120 may derive a variance σₑ² of the environmental noise by calculating a variance of Xₑ derived as described above. <Equation 19> ${σ}_{a}^{2} = {σ}_{h}^{2} + {σ}_{e}^{2}$

In Equation 19, a total variance σₐ² of the additive noise may be expressed as the sum of a variance σₕ² of the hardware noise and a variance σₑ²of the environmental noise.

According to the present embodiment, the second noise extraction unit 120 precisely removes the target signal and the hardware noise from radar signals received in an actual operational environment, and isolates and extracts only an environmental noise component through residual analysis and a subsequent SVD-based operation. The environmental noise signal extracted in this manner may be utilized in subsequent additive noise modeling and training data generation.

**The** third noise extraction unit 130 may calculate statistical characteristics of the additive noise based on the hardware noise signal and the environmental noise signal respectively extracted by the first noise extraction unit 110 and the second noise extraction unit 120, and may generate an additive noise signal for training data generation based on the statistical characteristics of the additive noise.

Specifically, the third noise extraction unit 130 calculates a variance σₐ² of the additive noise using the variance σₕ² of the hardware noise signal and the variance σₑ² of the environmental noise signal. The third noise extraction unit 130 may generate synthetic data corresponding to various noise environments by setting a minimum variance σₘᵢₙ and a maximum variance σₘₐₓ of the additive noise. <Equation 20> ${σ}_{min} = min \left\{{σ}_{a}^{\left(k\right)}\right\} , {σ}_{max} = max \left\{{σ}_{a}^{\left(k\right)}\right\}$

In Equation 20, the third noise extraction unit 130 performs repeated measurements on a plurality of environmental noise signals acquired under various environmental conditions and calculates an additive noise variance σₐ^{(k)} for each environmental scenario k. Thereafter, minimum values and maximum values may be estimated according to the following equation.

In Equation 20, σₘᵢₙ and σₘₐₓ denotes a minimum noise variance and a maximum noise variance, respectively, each being determined across a plurality of environmental scenarios.

For example, the third noise extraction unit 130 may set a noise distribution based on environmental scenarios such as: Scenario A-an open field (e.g., an empty parking lot, a playground, etc.); Scenario B-an urban area (e.g., a city area with many buildings); and Scenario C-an indoor space (*e.g.,* a small-scale laboratory, a hallway, etc.).

By using the same radar equipment in each scenario and measuring various target objects under fixed distance and angle conditions, the distribution of environmental noise can be quantitatively collected. For example, when Scenarios A and B are analyzed, at least 100 samples may be collected to calculate the corresponding σₘᵢₙ and σₘₐₓ values, and based on the calculated values, the distribution of additive noise may be defined as follows. <Equation 21> ${σ}_{a} ∼ U \left({σ}_{min}, {σ}_{max}\right)$

**In** other words, the final additive noise is set based on a uniform distribution and functions as an integrated noise model including the hardware noise and the environmental noise.

**The** data generation unit 140 may generate training data by adding the additive noise signal configured as described above to a radar signal of the target object. Specifically, synthetic data reflecting various noise environments may be generated by adding a complex-valued additive noise signal to complex-valued radar signals received according to a predetermined number of target objects.

In addition, the data generation unit 140 may provide structured training data applicable to supervised learning by mapping DOA information corresponding to the radar signal included in each piece of the training data. Since the training data generated in this manner reflects various noise conditions and includes ground truth information regarding the DOA, it is suitable for training a highly reliable DOA estimation model.

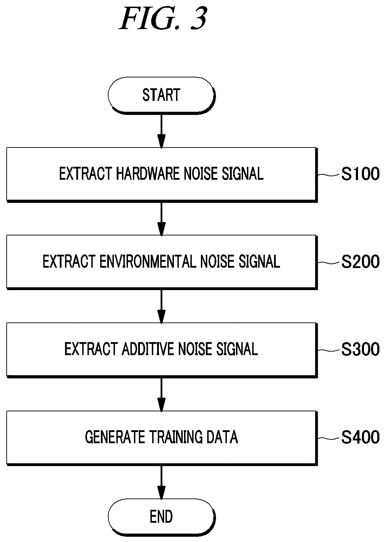

**FIG. 3** is a flowchart showing a method for generating training data according to an embodiment of the present disclosure.

The method illustrated in **FIG. 3** includes the processes time-sequentially performed according to the embodiment illustrated in **FIG. 1** and **FIG. 2****.** Therefore, the descriptions omitted below may be referenced by the method performed by the apparatus according to the embodiment illustrated in **FIG. 1** and **FIG. 2****.**

Referring to **FIG. 3****,** a method for generating training data is performed by an apparatus for generating training data for DOA estimation, and may include: a process of extracting a hardware noise signal of a radar based on a first radar signal received in the first environment (S100); a process of extracting an environmental noise signal corresponding to a second environment based on a second radar signal received in the second environment and the hardware noise signal (S200); a process of extracting an additive noise signal based on the hardware noise signal and the environmental noise signal (S300); and a process of generating training data based on the additive noise signal and target radar signal corresponding to each target object (S400).

**The** method can be implemented in a computer program stored in a medium to be executed by a computer or a storage medium including instructions codes executable by a computer. Also, the method can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The method may be further divided into additional steps or combined into fewer steps through the embodiments described above with reference to FIGS. 1 to 2. In addition, some steps may be omitted as necessary, and the order of the steps may be changed.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

## Claims

1. An apparatus for generating training data for estimating a direction of arrival (DOA), comprising:
a first noise extraction unit configured to extract a hardware noise signal of a radar based on a first radar signal received in a first environment;
a second noise extraction unit configured to extract an environmental noise signal corresponding to a second environment based on a second radar signal received in the second environment and the hardware noise signal;
a third noise extraction unit configured to extract an additive noise signal based on the hardware noise signal and the environmental noise signal; and
a data generation unit configured to generate training data based on the additive noise signal and a target radar signal corresponding to each target object.

2. The apparatus of Claim 1,
wherein the first environment is a chamber environment in which an environmental noise signal occurs below a predetermined level.

3. The apparatus of Claim 1,
wherein the first noise extraction unit receives a number of first radar signals greater than the number of radar channels in the first environment.

4. The apparatus of Claim 1,
wherein the first radar signal received in the first environment includes a target object signal and the hardware noise signal, and
the first noise extraction unit extracts the hardware noise signal by removing the target object signal from the first radar signal received in the first environment.

5. The apparatus of Claim 1,
wherein the first noise extraction unit performs single value decomposition (SVD) on the first radar signal received in the first environment to derive a first decomposition matrix based on a number of target objects and a number of radar channels.

6. The apparatus of Claim 5,
wherein the first noise extraction unit:
extracts information unrelated to the target object from the first decomposition matrix based on the number of target objects, and
extracts the hardware noise signal based on the extracted information.

7. The apparatus of Claim 1,
wherein the second environment is an actual operational environment in which the DOA estimation is performed.

8. The apparatus of Claim 1,
wherein the second radar signal received in the second environment includes a target object signal, the hardware noise signal, and the environmental noise signal, and
the second noise extraction unit extracts the environmental noise signal by removing the target object signal and the hardware noise signal from the second radar signal received in the second environment.

9. The apparatus of Claim 1,
wherein the second noise extraction unit performs singular value decomposition (SVD) on the second radar signal received in the second environment to derive a second decomposition matrix based on a number of target objects and a number of radar channels.

10. The apparatus of Claim 9,
wherein the second noise extraction unit:
extracts information unrelated to the target object from the second decomposition matrix based on the number of target objects, and
derives a residual matrix based on the extracted information.

11. The apparatus of Claim 10,
wherein the second noise extraction unit performs SVD on the residual matrix to derive a third decomposition matrix.

12. The apparatus of Claim 11,
wherein the second noise extraction unit:
extracts information unrelated to the hardware noise signal from the third decomposition matrix, and
extracts the environmental noise signal based on the extracted information.

13. The apparatus of Claim 1,
wherein the third noise extraction unit determines a minimum variance and a maximum variance of the additive noise signal based on respective variances of the hardware noise signal and the environmental noise signal.

14. The apparatus of Claim 1,
wherein the second noise extraction unit extracts environmental noise signals for a plurality of second environments, and
the third noise extraction unit generates the additive noise signal for the plurality of second environments based on the extracted environmental noise signals.

15. The apparatus of Claim 1,
wherein the data generation unit generates the training data by adding the additive noise signal to target radar signals received according to a predetermined number of target objects.
